# EUROPEAN PATENT APPLICATION

(11) **EP 4 601 144 A1**
(43) Date of publication of application: **13.08.2025**
(21) Application number: 24157167.8
(22) Date of filing: 12.02.2024
(51) Int. Cl.: H02J 3/01, C25B 1/04, C25B 15/02, H02M 7/04, H02M 7/155, H02M 7/162

(54) **MULTI-ARRAY ELECTROLYSIS SYSTEM WITH HARMONIC COMPENSATION**

(71) Applicant: Siemens Energy Global GmbH & Co. KG, 81739 München (DE)
(72) Inventor: Loku, Fisnik, 90768 Fürth (DE); Lukianov, Semen, 91058 Erlangen (DE)

(57) **Abstract**

A multi-array electrolysis system 100 comprises a system controller unit 110, a point-of-connection 112 to an AC power supply 114, and a plurality of electrolyser arrays 102,104,106,108, each comprising a low-level controller unit 116,118,120,122, a plurality of electrolyser units 224,226,228,230, a transformer system 232 having a primary side 234 connected to receive an alternating supply voltage signal from the power supply, and configured to provide on its secondary side a plurality of alternating secondary side voltages differing at least by pre-defined phase-shifts, and a plurality of rectifier units 256,258,260,262 configured to form a multipulse rectifier system 264 connected to receive said alternating secondary side voltages and configured to provide DC current to the electrolyser units 224,226,228,230, wherein the transformer system 232 is adapted to generate the alternating secondary side voltages with a transformer system phase offset to the alternating supply voltage signal that differs from the transformer system phase offset of the transformer system of at least one other of the electrolyser arrays 104,106,108, and wherein the system controller unit 110 is configured to monitor and evaluate one or more operational parameter signals 170 received from each of the electrolyser arrays 102,104,106,108 to determine an uncompensated harmonic at the primary side 234 of the transformer system 232 of one of the electrolyser arrays 102 and provide to the low-level controller unit 118,120,122 of at least one other of the electrolyser arrays 104,106,108 at least one low-level control parameter signal 172 adapted to cause at least one of the rectifier units of the other of the electrolyser arrays 104,106,108 to amplify an inverse harmonic corresponding to said uncompensated harmonic.

## Description

The present disclosure in general relates to compensation of harmonics in electrolysis systems with multiple electrolyser arrays connected to an AC (alternating current) power supply, such as an AC power grid. More particularly, the present disclosure relates to a multi-array electrolysis system with harmonic compensation. Further, the present disclosure relates to a computer program product, a computer-readable storage medium and a data carrier signal.

Electrolysis is a process of using electricity to split water into hydrogen and oxygen. This reaction takes place in a unit called an electrolyser and requires the supply of direct current (DC). An electrolysis system may comprise several parallel electrolyser units and may be referred to as an electrolyser array.

Since the number of installed electrolysis systems continuously increases, in particular due to an increasing demand for green hydrogen production, i.e., the production of hydrogen using renewable energy sources, large-scale electrolysis systems are provided, i.e., multi-array electrolysis systems, having multiple, e.g., dozens or hundreds or even more, electrolyser arrays connected in parallel to an alternating current (AC) power source, wherein each electrolyser array itself may contain several parallel electrolyser units (and each electrolyser unit may consist of one or a row of multiple electrolyser modules).

Each of the electrolyser arrays contains several electrolyser units in which the hydrogen generation takes place and which require the supply of direct current (DC). The DC current demand may be high, e. g. 7-10 kA. The direct current for the electrolyser units of an electrolyser array is generated using a plurality of rectifier units which receive phase shifted alternating voltage signals from a transformer system connected to an AC power supply, e.g., an AC power grid. A transformer system comprises a set, i.e., one or more, transformers. The transformer system and the connected plurality of rectifier units belong to an energy conversion arrangement, i.e., an AC/DC converter system, of the electrolyser array.

The AC/DC conversion does not only allow provision of DC current from an AC power supply but may also lead to an unwanted generation of harmonics. A harmonic of a voltage or current waveform with a certain basic frequency is a sinusoidal wave with a frequency that is a multiple of the basic frequency and may be generated during operation of the rectifier units (or any other non-linear load). Harmonics may cause, e.g., reduced power quality and increased equipment heating.

As an important example, thyristor-based rectifier units, i.e., thyristor rectifiers, which may, for example, comprise bridge rectifiers built with thyristors, are often used, mainly due to their efficiency and reliability, although they are prone to generating harmonic noise on their input signal due to their switching behaviour controlled by firing angle signals as the thyristor gate signals.

However, parallel connection of several thyristor-based rectifier units such that a multipulse rectifier system, e.g., a 24-pulse system, is formed, may be used to compensate harmonic noise by cancelling out their emitted lower harmonics, if the alternating input voltage signals to the rectifier units are provided with required phase shifts by a suitably configured transformer system.

However, in real systems deviations of transformer losses, the transformer secondary-side voltages and imprecise phase-shifts can occur, which may be considered acceptable and may be defined according to corresponding standards, such as the DIN EN / IEC 60076 or IEC 61378 standards. These allowed deviations or tolerances may result in insufficient or imperfect compensation of harmonics and may, for example, lead to a 24-pulse system not being able to completely remove the lower-order harmonics.

Therefore, in order to prevent harmonics from being emitted from electrolyser arrays using such AC/DC converter systems back into the signal received from the AC power supply, additional filter systems could be used to ensure that requirements defined for the AC power supply, such as grid code requirements of a connected AC power grid, are fulfilled. However, considering for example that the number of installed electrolysis systems in the existing transmission networks continuously increases with the demand for green hydrogen production, with electrolysis plants with system capacities in the Giga-Watt range, a huge, expensive amount of filter systems might be required to meet the requirements of a grid operator of interest. For example, a multi-array electrolysis system may require one filter system, and probably an additional one for redundancy, or may use a filter system for each individual electrolyser array.

It is an objective of the present invention to provide a multi-array electrolysis system that provides enhanced harmonic compensation with no or reduced need for harmonics filtering by additional filter systems.

This objective is solved by a multi-array electrolysis system as stated in claim 1 and a computer program product as stated in claim 9 suitable for operating a controller unit of such a multi-array electrolysis system, and a corresponding computer readable storage medium and data carrier signal as stated in claims 11 and 12, respectively. Advantageous additional embodiments of the invention are disclosed in the respective dependent claims.

According to a first aspect of the invention, a multi-array electrolysis system comprises a system controller unit, a point-of-connection (POC) to an AC power supply, and a plurality of electrolyser arrays, wherein each electrolyser array comprises a low-level controller unit, a plurality of electrolyser units, and a transformer system having a primary side connected to receive an alternating supply voltage signal from the AC power supply via the point-of-connection (POC), and configured to provide on its secondary side a plurality of alternating secondary side voltages differing at least by pre-defined phase-shifts. Further, each of the electrolyser arrays comprises a plurality of rectifier units configured to form a multipulse rectifier system, wherein said multipulse rectifier system is connected to receive the plurality of alternating secondary side voltages and is configured to provide DC current to the plurality of electrolyser units, and wherein the transformer system is adapted to generate the plurality of alternating secondary side voltages with a transformer system phase offset to the alternating supply voltage signal that differs from the transformer system phase offset of the transformer system of at least one other of the plurality of electrolyser arrays.

Further, the system controller unit is configured to monitor and evaluate one or more operational parameter signals received from each of the electrolyser arrays to determine an uncompensated harmonic at the primary side of the transformer system of one of the electrolyser arrays and provide to the low-level controller unit of at least one other of the plurality of electrolyser arrays at least one low-level control parameter signal adapted to cause at least one of the plurality of rectifier units of the at least one other of the plurality of electrolyser arrays to amplify an inverse harmonic corresponding to said uncompensated harmonic.

The transformer system phase offset is a "mechanical" phase offset, i.e., the transformer system is structurally adapted to generate the plurality of alternating secondary side voltages with a defined, fixed phase offset to the phase of the alternating supply voltage signal. The defined transformer system phase offsets (or phase shifts) of the transformer systems of any of the plurality of electrolyser arrays differ from the transformer system phase offset of the transformer system of at least one other of the plurality of electrolyser arrays. With this, and considering that several electrolyser arrays are operated in the multi-array system, the transformer systems of different electrolyser arrays can be mechanically designed to have another phase shift between the rectifier transformers of a transformer system instead of, for example, the general +-7.5° used for a single electrolyser array with a 24-pulse rectifier system. As an example, two electrolyser arrays can be designed to have transformer systems with transformer system phase offsets that differ by a difference that results in the phase offset between these arrays to be +-3.75°, thus leading to a 48-pulse system operation and thus (in the ideal case) eliminating all the harmonics lower than the 47th harmonic.

More harmonics can at least partly be compensated using further electrolyser arrays having further differing transformer system phase offsets. For example, the described system can be extended to at least partly suppress the 47th and the 49th harmonics by using another 2 electrolyser arrays with different transformer system phase offsets and the resulting phase difference between the two electrolyser array pairs being +-1.875°.

Further, in addition to adapting the "mechanical", structural design of the transformer systems of the plurality of electrolyser arrays of the multi-array electrolysis system to better compensate harmonics generated by other ones of the plurality of electrolyser arrays, the system controller unit monitors and evaluates operational parameter signals, e.g. voltage level, current level, level of active power etc., received from each of the electrolyser arrays and therewith detects or determines at least one uncompensated harmonic at the primary side, i.e. the input interface, of the transformer system of at least one of the electrolyser arrays. The system controller unit then initiates further compensation of the uncompensated harmonic emitted by a particular one of the plurality of electrolyser arrays by providing one or more low-level control parameter signals to at least one other of the low-level controller units, i.e., a control unit dedicated to control the AC/DC converter unit of a particular other one of the plurality of electrolyser arrays to cause at least one of the rectifier units of the other electrolyser arrays to amplify an inverse harmonic that (inversely) corresponds to the detected uncompensated harmonic and is therefore suitable to compensate the uncompensated harmonic. An inverse harmonic corresponding to a certain harmonic is 180 degree out-of-phase with said corresponding harmonic.

Even though the loading at the rectifier of interest, i.e., the rectifier unit of the other electrolyser array, may be reduced to a value lower than 1000, maybe to 990, this is considered an acceptable trade off, since the overall result remains good enough to avoid a need for one or several dedicated filtering systems dedicated to removal of uncompensated harmonics.

In an embodiment of the multi-array electrolysis system, the system controller unit is configured to apply a droop control scheme to generate the at least one low-level control parameter signal. In droop control, e.g., input frequency and voltage and power demand may be connected. "Droop" values are assigned to each electrolyser array and represent how much the frequency and voltage and power are allowed to deviate from their nominal values to account for changes. The droop control will then determine how the at least one low-level control parameter signal needs to change the control parameters of the electrolyser arrays, such as the firing angle signals for a thyristor-based rectifier system of an electrolyser array to comply with the droop values.

In an embodiment of the multi-array electrolysis system, the transformer system phase offset of the transformer system of at least one other of the plurality of electrolyser arrays differs from the transformer system phase offset of the transformer system of the at least one of the plurality of electrolyser arrays by a phase difference suitable to eliminate harmonics generated by the at least one of the plurality of electrolyser units. For example, two electrolyser arrays can have transformer systems with transformer system phase offsets that differ by a difference that results in the phase offset between these arrays to be +-3.75°. This constitutes a 48-pulse system, i.e., a 48-pulse rectifier system using more than one electrolyser array.

In an embodiment of the multi-array electrolysis system, the rectifier units are thyristor-based rectifier units. These are particularly useful in high-power rectifier systems due to their efficiency and reliability. A thyristor is a solidstate semiconductor device suitable for high-power applications that acts as a bistable switch which conducts when its gate electrode receives a current trigger signal, i.e., a firing angle signal, as the thyristor gate signal, and continues to conduct until the voltage across the device is reverse-biased or removed. The firing angle of the thyristor is the angle at which it is triggered by the firing angle signal. A thyristor-based rectifier, i.e., a thyristor rectifier, is or comprises, for example, a bridge rectifier built with thyristors.

In an example embodiment, the low-level control parameter signal is adapted to cause the low-level controller unit to provide firing angle signals with an additional offset to the at least one of the plurality of rectifier units of the at least one other of the plurality of electrolyser arrays. The firing angles may, for example, be controlled and aligned with the input voltages to the rectifier units, i.e., the alternating secondary side voltages of the connected transformer system, and the phase-differences that result between the different secondary side voltages are automatically aligned, and the harmonics resulting from the rectifier operation (6-pulse operation) are correspondingly compensated due to the phase-shifts. According to the embodiment, the firing angle of the rectifier unit of the other electrolyser array is adjusted by adding or subtracting an offset value, thereby creating an alignment of the at least one of the plurality of rectifier units of the at least one other of the plurality of electrolyser arrays to the rectifier unit of the electrolyser array that it emits a corresponding uncompensated harmonic phase-shifted to compensate the detected uncompensated harmonic emitted by the electrolyser array. In other words, in case one of the harmonics cannot be compensated due to deviations (even within the tolerances defined in standards) of, e.g., transformer losses, the transformer secondary-side voltages and imprecise phase-shifts, the firing angle of the rectifier unit is adjusted by adding or subtracting an offset value from the resulting firing angle of a rectifier of interest, i.e. a rectifier unit suitable to generate an (inverse) harmonic to a detected uncompensated harmonic emitted from another electrolyser array, leading to an overall alignment of the rectifier of interest with the wanted resulting phase shift.

In a preferred example embodiment, the multipulse rectifier systems of each of the electrolyser arrays of the multi-array electrolysis system are 24-pulse systems. Here, the rectifier units of each electrolyser array are connected in parallel and each of the rectifier units is connected to an electrolyser unit (which may comprise a row of electrolyser modules). Two neighbouring rectifier units connected in parallel cancel their emitted lower harmonics out, thereby building a 12-pulse system. Two 12-pulse systems cancel their emitting harmonics and therefore build a 24-pulse system.

For these systems special transformer systems with defined phase-shifts between their secondary-side voltage signals are required. If the transformer losses, the secondary-side voltage signals of the transformer (e.g., the delta and the wye winding), and the additional transformer branch phase-shift (+-7.5°) are perfectly balanced between themselves, all the harmonics below the 23rd harmonic would ideally be completely compensated in such a 24-pulse system and the first harmonics that would result would be the 23rd harmonic.

In a preferred example embodiment, he multi-array elect the transformer system phase offset of the transformer system of at least one of the electrolyser arrays differs from the transformer system phase offset of the transformer system of the at least one other of the plurality of electrolyser arrays by a phase difference adapted such that the plurality of rectifier units of the at least one of the electrolyser arrays and the plurality of rectifier units of the at least one other of the electrolyser arrays form a 48-pulse system, i.e., a 48-pulse rectifier system. For this embodiment, two arrays can be taken where the phase shift between these arrays results to have a +-3.75°, thus leading to a 48-pulse system operation and thus eliminating all the lower harmonics than the 47th harmonic. This approach can be extended to remove the 47th and the 49th harmonics by using another 2 arrays, with the resulting phase difference between the two array couples being +-1.875°. In an example embodiment, transformer systems of any remaining electrolyser array in the multi-array system can be designed to be aligned with one of the mentioned transformer shifts.

In an embodiment of the multi-array electrolysis system, the system controller unit comprises a programmable device and a memory. The programmable device refers to any data processing unit such as a central processing unit (CPU), microprocessor, microcontroller or any other processor. The memory can comprise a computer program product corresponding to a computer program adapted to configure the programmable device of the system controller unit to control harmonic compensation via issuing the low-level control parameter signals.

According to a second aspect of the invention, a computer program product comprises code portions that, when executed on a programmable device of a system controller unit of a multi-array electrolysis system according to the first aspect of the invention, enable the system controller unit to monitor and evaluate one or more operational parameter signals received from each of a plurality of electrolyser arrays of the multi-array electrolysis system to determine an uncompensated harmonic at the primary side of a transformer system of one of the electrolyser arrays and provide to a low-level controller unit of at least one other of the plurality of electrolyser arrays at least one low-level control parameter signal adapted to cause at least one of a plurality of rectifier units of the at least one other of the plurality of electrolyser arrays to amplify an inverse harmonic corresponding to the uncompensated harmonic.

In an embodiment, the computer program product further comprises code portions that, when executed on the programmable device of the system controller unit of the multi-array electrolysis system according to the first aspect of the invention, enable the system controller unit to apply a droop control scheme to generate the at least one low-level control parameter signal.

Further, according to a third aspect of the invention, a computer readable storage medium is provided, having stored therein a computer program product according to the second aspect of the invention. And according to a fourth aspect of the invention, a data carrier signal is provided that carries a computer program product according to the second aspect of the invention. The computer program product may be provided on a computer readable storage medium, i.e., a data carrier, such as a CD, DVD, memory card or other storage medium, in particular a non-volatile storage medium, stored with data that is loadable in a memory of the programmable apparatus, wherein the data represents the computer program. As another example, the data carrier may further be a data connection, such as a telephone cable or data cable or a wireless connection, and the computer program product may be represented as data carrier signal transmitted via the data carrier.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates an example of a multi-array electrolysis system according to an embodiment of the invention; and
- Fig. 2: schematically illustrates an example of a single electrolyser array suitable for a multi-array electrolysis system.

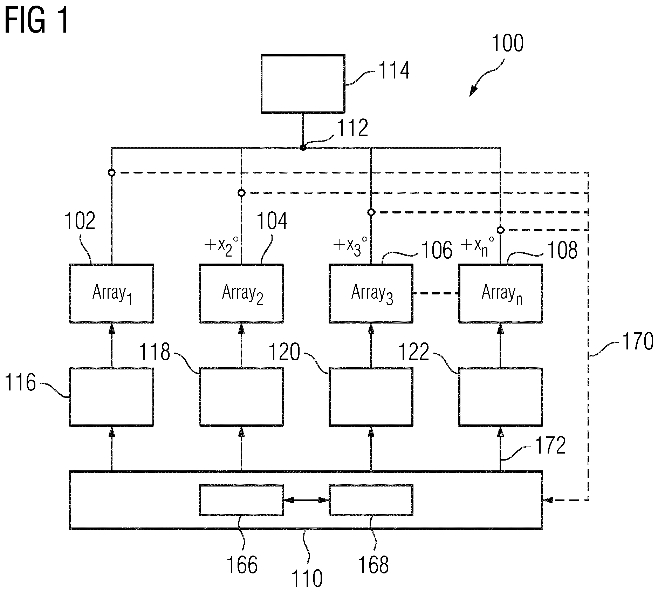

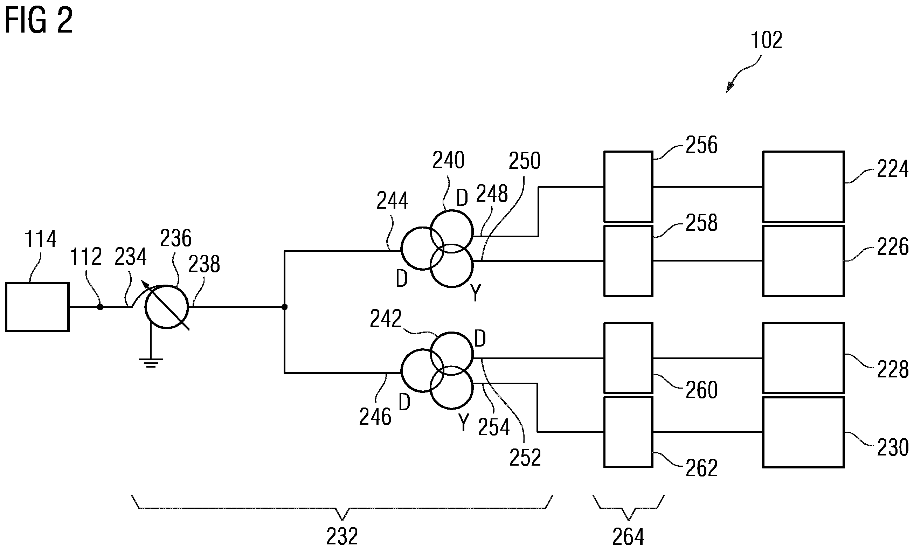

Identical reference numerals used in Fig. 1 and Fig. 2 refer to the same or similar elements. Referring to both Fig. 1 and Fig. 2, in Fig. 1 an example of a multi-array electrolysis system according to an embodiment of the invention and in Fig. 2 an example of a single electrolyser array suitable for such a multi-array electrolysis system are schematically illustrated.

The multi-array electrolysis system 100 shown in Fig. 1 comprises a plurality of electrolyser arrays 102, 104, 106, 108 and a system controller unit 110. The system controller unit 110 comprises a programmable device 166 and a memory 168. The electrolyser arrays 102, 104, 106, 108 are connected via a point-of-connection (POC) 112 to an AC power supply 114. Each of the electrolyser arrays 102, 104, 106, 108 can comprise or, as shown in Fig. 1, is connected to its individual low-level controller unit 116, 118, 120, 122. As an example, one of the electrolyser arrays 102, 104, 106, 108, e.g., electrolyser array 102, is schematically illustrated in more detail in Fig. 2. The electrolyser array 102 comprises a plurality of electrolyser units 224, 226, 228, 230, wherein each electrolyser unit may contain a row of electrolyser modules(not shown). The shown electrolyser array 102 contains a transformer system having a primary side 234, i.e., a primary side interface, that is connected to receive an alternating supply voltage signal from the AC power supply 114 via the point-of-connection (POC) 112. In the example shown in Fig. 2, the transformer system 232 contains multiple transformer units: An adjustable transformer 236 (as a first part of the transformer system 232) has an adjustable transformer primary side (which refers to the primary side winding of the adjustable transformer 236) as the primary side 234 of the transformer system 232 that is connected to the AC power supply 114 via the point-of-connection (POC) 112. An adjustable transformer secondary side 238 (which refers to the secondary side winding of the adjustable transformer 236 and which is shown as an autotransformer with a tap changer), is connected to a second part of the transformer system 232 which comprises a set of rectifier transformers, i.e., transformer units 240, 242 having their transformer unit primary sides 244, 246 connected to the adjustable transformer secondary side 238. The transformer units 240, 242 may be +7.5° and, respectively, - 7.5° phase-shifting transformer units. The transformer units 240, 242 provide on their transformer unit secondary sides 248, 250, 252, 254, which together constitute the secondary side, i.e., the secondary side interface, of the transformer system 232, a plurality of alternating secondary side voltages differing at least by pre-defined phase-shifts.

Further, each of the electrolyser arrays 102, 104, 106, 108 shown in Fig. 1, e. g. electrolyser array 102 shown in more detail in Fig. 2, comprises a plurality of rectifier units 256, 258, 260, 262 which are configured to form a multipulse rectifier system 264, which is connected to receive the plurality of alternating secondary side voltages as input and is configured to provide DC current to the plurality of electrolyser units 224, 226, 228 230. The rectifier units 256, 258, 260, 262 shown in Fig. 2 can be thyristor-based rectifier units. In the example shown in Fig. 2, each of the rectifier units 256, 258, 260, 262 is a 6-pulse thyristor-based bridge rectifier, and the multipulse rectifier system 264 is a 24-pulse system.

The transformer system 232 of the electrolyser array 102 is adapted to generate the plurality of alternating secondary side voltages with a transformer system phase offset to the alternating supply voltage signal that is supplied by the AC power supply 114 that differs from the transformer system phase offset of the transformer system of at least one other of the plurality of electrolyser arrays 104, 106, 108. For example, if the transformer system phase offset of transformer system 232 of a first electrolyser array 102 is assumed to be 0°, the transformer system phase offsets of the other electrolyser arrays 104, 106, 108 may differ by phase offsets x₂°, x₃° and x₄°, respectively. The transformer system phase offset of the transformer system of at least one other of the plurality of electrolyser arrays differs from the transformer system phase offset of the transformer system of, e.g., the first electrolyser array 102 by a phase difference, wherein one or more of these phase differences which are structurally defined by the transformer system of the respective other electrolyser array 104, 106, 108 is/are selected suitably to eliminate harmonics generated by the first electrolyser array 102.

Further, the system controller unit 110 is configured to monitor the inputs of the electrolyser arrays 102, 104, 106, 108 and measure and evaluate operational parameter signals 170, e.g., voltage, current, active power levels, etc., received from each of the electrolyser arrays 102, 104, 108, to determine an uncompensated harmonic at the primary side 234 of the transformer system 232 of one of the electrolyser arrays, e.g. electrolyser 102, and provide to the low-level controller unit 118, 120, 122 of at least one other of the plurality of electrolyser arrays (i.e. in the described example not electrolyser array 102) at least one low-level control parameter signal 172 adapted to cause at least one of the plurality of rectifier units of the at least one other of the plurality of electrolyser arrays 104, 106, 108 to amplify an inverse harmonic corresponding to the uncompensated harmonic detected at the first electrolyser unit 102. This is achieved by the system controller unit 110 by providing the low-level control parameter signal 172 adapted to cause the low-level controller unit 118, 120 122 of another electrolyser array (i.e. not the electrolyser array 102 that was found emitting an uncompensated harmonic) to provide firing angle signals with an additional offset to at least one of the plurality of rectifier units of the other electrolyser array.

In other words, in case it is detected by the system controller unit 110 of the multi-array electrolysis system 100 that harmonics are emitted back into the supply voltage signal by one of the electrolyser arrays 102, 104, 106, 108, which are not completely compensated due to deviations (even within the tolerances defined in standards), of, e.g., transformer losses, the transformer secondary-side voltages and imprecise phase-shifts etc., a low-level control parameter signal is sent to the low-level controller unit of the other electrolyser array which causes said low-level controller unit to adjust firing angles of a rectifier unit of the other electrolyser array is adjusted by adding or subtracting a value derived from the firing angle of a rectifier unit of interest, i.e. a rectifier unit of the electrolyser array detected to be emitting an uncompensated harmonic, such that the other electrolyser array also emits a similar uncompensated harmonic corresponding to the uncompensated harmonic, but phase-shifted to compensate the uncompensated harmonic.

For example, the shown multi-array electrolysis system 100 contains n electrolyser arrays 102, 104, 106, 108 which are connected in parallel. It is initially assumed that for the first electrolyser array 102, which comprises four electrolyser units 224, 226, 228, 230, no additional phase shift is inserted by means of low-level controller unit 116, i.e. a firing angle of 0° is assumed, which means that the current for each rectifier unit will be conducted as soon as the threshold value of the corresponding rectifier unit is reached. Due to the transformer system configuration, current signals for the rectifier units of the 24-pulse system shown as multipulse rectifier system 264 in Fig. 2 should have additional phase shifts which should normally result in complete compensation of any lower-order harmonics below the 23rd harmonic that could otherwise be emitted from the first electrolyser array 102. However, there are standardized tolerances that are allowed when constructing the transformer system 232, and these deviations may lead to the lower order harmonics of the electrolyser array to not be fully compensated within the electrolyser array 102. However, since other electrolyser arrays 104, 106, 108 of the multi-array electrolysis system 100 are provided with "mechanical", structural phase offsets compared to the first electrolyser array, emitted harmonics may at least partly be compensated. The system controller unit 110 is configured to generate "artificial" uncompensated harmonics in another electrolyser array that correspond to the uncompensated harmonics but are phase-shifted suitably to compensate the uncompensated harmonics. For this, the system controller unit 110 provides low-level control parameter signals 172 to the one or more other electrolyser array 104, 106, 108 to let the low-level controller unit of the other electrolyser array change (add or subtract an offset to) the firing angle signal of the thyristor-based rectifier unit of the multipulse rectifier system of the other electrolyser array that is capable of generating the harmonic required for compensating the uncompensated harmonic emitted from the first electrolyser array 102.

This will result in a reduced active power consumption. While the difference in the consumed active power can be regarded as negligible, the effect it can have on the reduction of the harmonics at the point of connection can be significant, as the need for a filtering system is eliminated or at least reduced.

Those skilled in the art will recognize that the boundaries between blocks in Fig. 1 and Fig. 2 are merely illustrative and that alternative embodiments may merge blocks or impose an alternative composition of functionality upon various blocks.

Although the invention has been illustrated and described in detail by the shown preferred embodiments, the invention is not limited by the disclosed examples and other variations can be derived therefrom by those skilled in the art without departing from the scope of the invention.

In summary, a multi-array electrolysis system 100 comprises a system controller unit 110, a point-of-connection 112 to an AC power supply 114, and a plurality of electrolyser arrays 102,104,106,108, each comprising a low-level controller unit 116,118,120,122, a plurality of electrolyser units 224,226,228,230, a transformer system 232 having a primary side 234 connected to receive an alternating supply voltage signal from the power supply, and configured to provide on its secondary side a plurality of alternating secondary side voltages differing at least by pre-defined phase-shifts, and a plurality of rectifier units 256,258,260,262 configured to form a multipulse rectifier system 264 connected to receive said alternating secondary side voltages and configured to provide DC current to the electrolyser units 224,226,228,230, wherein the transformer system 232 is adapted to generate the alternating secondary side voltages with a transformer system phase offset to the alternating supply voltage signal that differs from the transformer system phase offset of the transformer system of at least one other of the electrolyser arrays 104,106,108, and wherein the system controller unit 110 is configured to monitor and evaluate one or more operational parameter signals 170 received from each of the electrolyser arrays 102,104,106,108 to determine an uncompensated harmonic at the primary side 234 of the transformer system 232 of one of the electrolyser arrays 102 and provide to the low-level controller unit 118,120,122 of at least one other of the electrolyser arrays 104,106,108 at least one low-level control parameter signal 172 adapted to cause at least one of the rectifier units of the other of the electrolyser arrays 104,106,108 to amplify an inverse harmonic corresponding to said uncompensated harmonic.

Further, a computer program product, a computer readable storage medium and a data carrier signal are provided.

## Claims

1. Multi-array electrolysis system (100), comprising
a system controller unit (110);
a point-of-connection (112)to an AC power supply (114); and
a plurality of electrolyser arrays (102, 104, 106, 108), each electrolyser array (102, 104, 106, 108) comprising
a low-level controller unit (116, 118, 120, 122),
a plurality of electrolyser units (224, 226, 228, 230),
a transformer system (232) having a primary side (234) connected to receive an alternating supply voltage signal from the AC power supply (114) via the point-of-connection (112), and configured to provide on its secondary side a plurality of alternating secondary side voltages differing at least by pre-defined phase-shifts, and
a plurality of rectifier units (256, 258, 260, 262) configured to form a multipulse rectifier system (264), said multipulse rectifier system (264) connected to receive said plurality of alternating secondary side voltages and configured to provide DC current to the plurality of electrolyser units (224, 226, 228, 230), wherein
the transformer system (232) is adapted to generate the plurality of alternating secondary side voltages with a transformer system phase offset to the alternating supply voltage signal that differs from the transformer system phase offset of the transformer system of at least one other of the plurality of electrolyser arrays (104, 106, 108); and wherein the system controller unit (110) is configured to
monitor and evaluate one or more operational parameter signals (170) received from each of the electrolyser arrays (102, 104, 106, 108) to determine an uncompensated harmonic at the primary side (234) of the transformer system (232) of one of the electrolyser arrays (102) and
provide to the low-level controller unit (118, 120, 122) of at least one other of the plurality of electrolyser arrays (104, 106, 108) at least one low-level control parameter signal (172) adapted to cause at least one of the plurality of rectifier units of the at least one other of the plurality of electrolyser arrays (104, 106, 108) to amplify an inverse harmonic corresponding to said uncompensated harmonic.

2. The multi-array electrolysis system as claimed in claim 1, wherein the system controller unit (110) is configured to apply a droop control scheme to generate the at least one low-level control parameter signal.

3. The multi-array electrolysis system as claimed in claim 1 or claim 2, wherein the transformer system phase offset of the transformer system of at least one other of the plurality of electrolyser arrays (104, 106, 108) differs from the transformer system phase offset of the transformer system (232) of the at least one of the plurality of electrolyser arrays (102) by a phase difference suitable to eliminate harmonics generated by the at least one of the plurality of electrolyser arrays (102).

4. The multi-array electrolysis system as claimed in any of the preceding claims, wherein the rectifier units (256, 258, 260, 262) are thyristor-based rectifier units.

5. The multi-array electrolysis system as claimed in claim 4, wherein the low-level control parameter signal (172) is adapted to cause the low-level controller unit (118, 120, 122) to provide firing angle signals with an additional offset to the at least one of the plurality of rectifier units of the at least one other of the plurality of electrolyser arrays (104, 106, 108).

6. The multi-array electrolysis system as claimed in claim 4 or claim 5, wherein the multipulse rectifier systems (264) of each of the electrolyser arrays (102, 104, 106, 108) are 24-pulse systems.

7. The multi-array electrolysis system as claimed in claim 6, wherein the transformer system phase offset of the transformer system (232) of at least one of the electrolyser arrays (102) differs from the transformer system phase offset of the transformer system of the at least one other of the plurality of electrolyser arrays (104, 106, 108) by a phase difference adapted such that the plurality of rectifier units (256, 258, 260, 262) of the at least one of the electrolyser arrays (102) and the plurality of rectifier units of the at least one other of the electrolyser arrays (104, 106, 108) form a 48-pulse system.

8. The multi-array electrolysis system as claimed in any of the preceding claims, wherein the system controller unit (110) comprises a programmable device (166) and a memory (168).

9. Computer program product, comprising code portions that, when executed on a programmable device (166) of a system controller unit (110) of a multi-array electrolysis system (100) as claimed in claim 8, enable the system controller unit (110) to
monitor and evaluate one or more operational parameter signals (170) received from each of a plurality of electrolyser arrays (102, 104, 106, 108) of the multi-array electrolysis system (100) to determine an uncompensated harmonic at the primary side (234) of a transformer system (232) of one of the electrolyser arrays (102) and
provide to a low-level controller unit of at least one other of the plurality of electrolyser arrays (104, 106, 108) at least one low-level control parameter signal (172) adapted to cause at least one of a plurality of rectifier units of the at least one other of the plurality of electrolyser arrays (104, 106, 108) to amplify an inverse harmonic corresponding to the uncompensated harmonic.

10. The computer program product as claimed in claim 9, further comprising code portions that, when executed on the programmable device (166) of the system controller unit (110) of the multi-array electrolysis system (100) as claimed in claim 8, enable the system controller unit (110) to
apply a droop control scheme to generate the at least one low-level control parameter signal (172).

11. Computer readable storage medium, comprising a computer program product as claimed in claim 9 or claim 10.

12. Data carrier signal carrying the computer program product as claimed in claim 9 or claim 10.
